# FASCICULE DE BREVET EUROPEEN

(11) **EP 3 271 608 B1**
(45) Date de publication et mention de la délivrance du brevet: **06.01.2021**
(21) Numéro de dépôt: 16713968.2
(22) Date de dépôt: 16.03.2016
(51) Int. Cl.: F16F 9/54, E01D 19/14, E01D 19/16

(54) **DISPOSITIF D'AMORTISSEMENT DE VIBRATIONS D'UN CABLE**
VORRICHTUNG ZUR DÄMPFUNG VON SCHWINGUNGEN EINES KABELS
DEVICE FOR DAMPING VIBRATIONS OF A CABLE

(30) Priorité: 16.03.2015 FR 1552141
(43) Date de publication de la demande: 24.01.2018
(73) Titulaire: SOLETANCHE FREYSSINET, 92500 Rueil Malmaison (FR)
(72) Inventeur: MELLIER, Erik, 78220 Viroflay (FR)
(74) Mandataire: Plasseraud IP
(86) Numéro de dépôt international: PCT/FR2016/050587
(87) Numéro de publication internationale: WO 2016/146947

(56) Documents cités:
- EP-A1- 0 716 943
- FR-A1- 2 854 217
- FR-A1- 2 859 260
- JP-A- H0 959 921

## Description

La présente invention concerne les techniques d'amortissement des vibrations que subissent les câbles utilisés pour supporter les ouvrages d'art.

Elle s'applique notamment aux haubans de ponts. Les haubans vibrent notamment à cause des actions climatiques telles que le vent, la pluie ou le givre, mais aussi à cause du trafic sur l'ouvrage. Afin d'amortir ces vibrations, différents types de dispositif ont été proposés.

Dans un premier type de dispositif d'amortissement, l'amortissement des vibrations est assuré par un dispositif amortisseur dit interne, c'est-à-dire par des amortisseurs agencés directement entre un câble de l'ouvrage et un autre élément de la structure supportée de cet ouvrage, comme un tube fixé à la structure supportée (un tablier de pont par exemple) et contenant la partie inférieure du câble (voir par exemple FR 2 859 260 A1).

Ce type de dispositif atteint toutefois ses limites lorsque les câbles deviennent très longs. On utilise alors un deuxième type de dispositif dit externe et agencé entre le câble à amortir et le tablier du pont. En particulier, dans des configurations à câble de grande longueur, il est connu d'utiliser des dispositifs d'amortissement comprenant un support par exemple en forme de T ou de A fixé au tablier du pont considéré et sur lequel sont fixées les extrémités d'amortisseurs linéaires. Voir par exemple JP H09 599821 A. Les extrémités opposées de ces amortisseurs sont attachées au câble à amortir par l'intermédiaire d'un collier à travers lequel les vibrations du câble sont transmises.

Les dispositifs de ce type sont adaptés pour amortir efficacement les vibrations de câbles de grande longueur. Toutefois, ils présentent aussi des inconvénients. En effet, le débattement des câbles très longs induit par les vibrations est important, ce qui impose de disposer d'amortisseurs ayant une grande course et par extension d'un support de dimensions importantes. Cet encombrement du support est problématique dans la mesure où l'espace disponible sur le tablier est limité, ce qui peut aboutir à un conflit avec les gabarits de passage des piétons et des véhicules sur le pont. D'autres dispositifs pertinents de l'art antérieur sont par exemple ceux décrits dans le document FR 2 854 217.

Un but de l'invention est de perfectionner ce type de dispositif pour des câbles de grande longueur.

L'invention porte sur un dispositif d'amortissement de vibrations d'un câble, le dispositif comprenant :
- un support,
- au moins un premier amortisseur pour amortir les vibrations du câble, le premier amortisseur comprenant un premier élément et un deuxième élément déplaçables de façon télescopique l'un par rapport à l'autre, le deuxième élément étant destiné à être fixé au câble, le premier élément présentant une extrémité distale et une extrémité proximale par rapport au câble, et
- une fixation agencée sur le support pour fixer le premier amortisseur au support, la fixation étant fixée au premier amortisseur à un emplacement le long du premier amortisseur situé à l'écart de l'extrémité distale du premier élément en direction de l'extrémité proximale. Dans une configuration d'utilisation du dispositif d'amortissement dans laquelle le support est fixé à une structure de réception et le premier amortisseur est fixé au câble et au support, le premier amortisseur est incliné par rapport à un plan vertical dans lequel le câble s'étend et sensiblement dans lequel le support est fixé à la structure de réception.

Du fait de l'agencement du premier amortisseur par rapport au support, l'encombrement, et en particulier la longueur de l'amortisseur, est un facteur moins dimensionnant du support. Les dimensions du support, et en particulier sa largeur, peuvent donc être réduites par rapport au support du type de dispositif décrit ci-dessus.

Selon un autre aspect de l'invention, ledit emplacement est situé à une distance de l'extrémité distale du premier élément du premier amortisseur supérieure ou égale à 25%, et de préférence supérieure ou égale à 50% de la longueur du premier élément.

Selon un autre aspect de l'invention, le premier élément est un corps du premier amortisseur et le deuxième élément est une tige déplaçable de façon télescopique par rapport au corps, la fixation étant fixée au premier élément.

Selon un autre aspect de l'invention, le premier élément est une tige du premier amortisseur et le deuxième élément est un corps du premier amortisseur, la tige étant déplaçable de façon télescopique par rapport au corps.

Selon un autre aspect de l'invention, la fixation comprend des montants, un plateau monté sur les montants de manière pivotante autour d'un premier axe, le plateau comprenant un passage central dans lequel le premier amortisseur est agencé, le premier amortisseur étant monté dans le passage central de manière pivotante par rapport au plateau autour d'un deuxième axe.

Selon un autre aspect de l'invention, la fixation comprend des tourillons portés par l'un parmi le plateau et le premier amortisseur et des orifices de réception complémentaires portés par l'autre parmi le plateau et le premier amortisseur, le premier amortisseur étant fixé au plateau par coopération des tourillons et des orifices de réception.

Selon un autre aspect de l'invention, le support comprend un évidement dans lequel la fixation est agencée et au travers duquel le ou chaque premier amortisseur est disposé.

Selon un autre aspect de l'invention, l'évidement comprend une surface centrale et au moins une surface inclinée orientée à l'écart de la fixation et située à l'aplomb du premier amortisseur.

Selon un autre aspect de l'invention, le dispositif comprend en outre au moins un deuxième amortisseur pour amortir les vibrations du câble, le deuxième amortisseur comprenant un premier élément et un deuxième élément déplaçables de façon télescopique l'un par rapport à l'autre, le deuxième élément étant destiné à être fixée au câble, ledit premier élément étant fixé au support par une deuxième fixation.

Selon un autre aspect de l'invention, la deuxième fixation est fixée au premier élément du deuxième amortisseur au niveau d'une extrémité distale du premier élément dudit deuxième amortisseur par rapport au câble.

Selon un autre aspect de l'invention, le ou chaque deuxième amortisseur s'étend dans un plan vertical dans lequel s'étend le câble.

Selon un autre aspect de l'invention, la deuxième fixation est fixée au deuxième amortisseur à un emplacement le long du premier élément du deuxième amortisseur situé à l'écart de l'extrémité distale du premier élément.

Selon un autre aspect de l'invention, dans une configuration d'utilisation dans laquelle le support est fixé à une structure de réception et le deuxième amortisseur est fixé au câble et au support, le deuxième amortisseur est incliné par rapport à un plan vertical dans lequel le câble s'étend.

Selon un aspect de l'invention, le dispositif d'amortissement est un dispositif d'amortissement externe, une extrémité inférieure du support étant fixée à un tablier de pont, le support s'étendant depuis le tablier de pont en direction du câble.

L'invention concerne également un pont à haubans comprenant au moins un pylône, un tablier, des haubans constitués de câbles s'étendant obliquement entre le pylône et le tablier pour supporter le tablier, et au moins un dispositif d'amortissement tel que défini ci-dessus monté entre un hauban et le tablier.

L'invention sera mieux comprise à la lecture détaillée de la description qui va suivre, donnée uniquement à titre d'exemple et faite en référence aux Figures annexées, sur lesquelles :
- La Figure 1 est une illustration schématique d'un pont à hauban selon l'invention ;
- La Figure 2 est une illustration schématique d'une vue longitudinale d'un dispositif d'amortissement selon l'invention ;
- La Figure 3 est une illustration schématique d'une vue transversale d'un dispositif d'amortissement selon l'invention ;
- La Figure 4 est une illustration schématique d'un premier amortisseur d'un dispositif d'amortissement selon l'invention ;
- La Figure 5 est une illustration d'une fixation de moyens de fixation d'un premier amortisseur à un support du dispositif d'amortissement selon l'invention ;
- La Figure 6 est une illustration d'un deuxième amortisseur et de moyens de fixation du deuxième amortisseur dans un dispositif d'amortissement selon l'invention;
- La Figure 7 est une illustration d'un dispositif d'amortissement selon une variante de l'invention ; et
- Les Figures 8a et 8b illustrent un dispositif d'amortissement selon une autre variante de l'invention.

L'invention est décrite ci-après dans son application non limitative aux ponts à haubans. Les câbles dont il s'agit d'amortir les vibrations sont alors les haubans. Ces vibrations sont par exemple dues au passage de véhicules sur le pont considéré, au vent, etc.

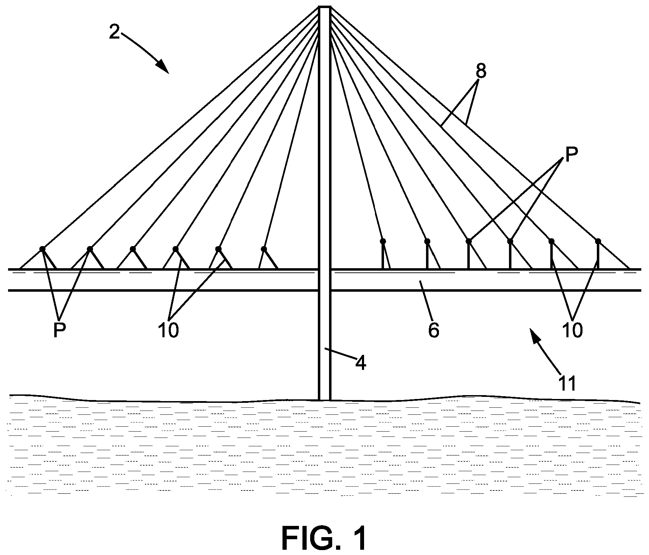

La Figure 1 illustre un pont à haubans 2 selon l'invention. Le pont 2 comprend des pylônes 4, un tablier 6 et des haubans 8 s'étendant entre l'un des pylônes 4 et le tablier 6 pour supporter le tablier 6.

Un ou plusieurs haubans 8 sont équipés d'un dispositif d'amortissement 10 selon l'invention, ci-après dispositif 10. Comme indiqué précédemment, le dispositif 10 est un dispositif externe. Le dispositif 10 s'étend sensiblement transversalement au hauban 8 correspondant entre un point d'attache P du hauban 8 et le tablier 6. Le point d'attache P est par exemple situé à proximité de l'ancrage bas du hauban (par exemple à quelques % de la longueur totale du hauban 8).

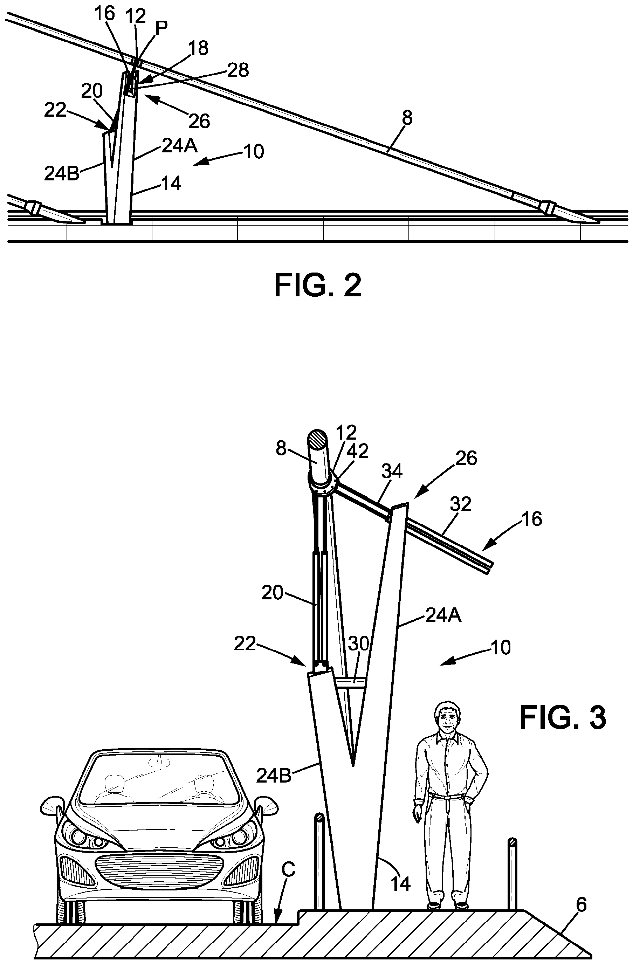

En référence à la Figure 2, le dispositif 10 est fixé au hauban 8 au niveau du point d'attache P par l'intermédiaire d'un collier 12 enserrant le hauban 8 et dans lequel des extrémités d'amortisseurs du dispositif 10 décrits ci-après sont reçues.

Le dispositif 10 comprend un support 14, des premiers amortisseurs 16 et des moyens de fixation 18 des premiers amortisseurs 16 au support 14. Le dispositif 10 comprend en outre des deuxièmes amortisseurs 20 et des moyens de fixation 22 des deuxièmes amortisseurs 20 au support 14.

Le support 14 est également connu sous le nom de bâti. En référence aux Figures 2 et 3, le support 14 fixé à son extrémité inférieure au tablier 6 du pont 2. Comme illustré sur la Figure 2, le support 14 s'étend depuis le tablier 6 en direction du hauban 8. Il s'étend sensiblement transversalement au hauban. Comme décrit plus en détail ci-après, il peut s'étendre orthogonalement au hauban ou non. Avantageusement, le support 14 est immobile par rapport au tablier 6.

Le support 14 s'étend sensiblement selon un plan. Le plan du support est préférentiellement sensiblement orthogonal à la direction du hauban 8. Toutefois, d'autres orientations sont envisageables. En particulier, dans certains modes de réalisation, le support 14 s'étend sensiblement orthogonalement au tablier 6 et n'est pas orthogonal au hauban 8, ce dernier étant incliné par rapport au tablier 6. En pratique, le support 14 peut être disposé sur le tablier 6 de sorte qu'il se trouve entre une position dans laquelle il est sensiblement orthogonal au tablier 6 et une position dans laquelle il est sensiblement orthogonal au hauban 8.

Le support 14 présente une forme générale de V et présente deux branches. Les branches sont de longueurs respectives différentes. La branche la plus longue, ci-après branche 24A, présente une extrémité libre 26 décalée latéralement par rapport à la portion du hauban 8 qui la surplombe.

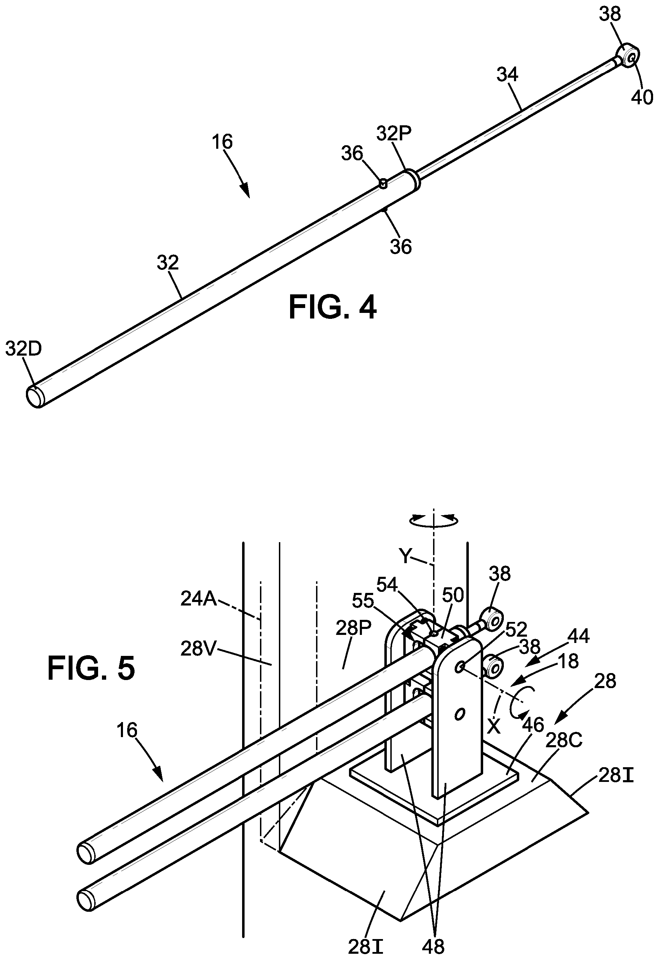

Les premiers amortisseurs 16 sont fixés au niveau de cette extrémité libre 26 via les moyens de fixation 18. A cet effet, l'extrémité libre 26 comprend un évidement 28 (Figure 5) dans lequel les moyens de fixation 18 sont agencés et au travers duquel les premiers amortisseurs 16 sont disposés. En référence à la Figure 5, l'évidement 28 comprend par exemple une surface centrale 28C plane, et deux surfaces inclinées 28I de part et d'autre de la surface centrale 28C et situées à l'aplomb des premiers amortisseurs 16. Ces surfaces inclinées 28I sont orientées à l'écart des moyens de fixation 18. Comme décrit plus en détail ci-après, la présence de ces surfaces inclinées 28I permet d'augmenter le débattement angulaire des premiers amortisseurs lorsque ceux-ci sont amenés à pivoter par rapport au support 14.

La branche la plus courte du support 14, ci-après branche 24B (Figures 2 et 3), présente une extrémité libre située sensiblement à l'aplomb du hauban 8 et au niveau de laquelle les deuxièmes amortisseurs 20 sont fixés via les moyens de fixation 22.

Dans certains modes de réalisation, le support 14 comprend en outre une membrure 30 (Figure 3) s'étendant entre les deux branches 24A, 24B. Cette membrure se présente par exemple sous la forme d'une tige disposée sensiblement horizontalement et ancrée dans les branches à ses extrémités. La membrure 30 apporte une rigidité supérieure aux branches sollicitées par les amortisseurs 16, 20 et améliore ainsi la rigidité globale de l'appui offert au dispositif amortisseur par le support 14.

Le support 14 est réalisé à partir d'un matériau présentant une bonne tenue mécanique et une bonne résistance à la corrosion, et/ou dispose d'un traitement de surface contre la corrosion. Avantageusement, le support 14 est réalisé à partir d'acier.

En référence aux Figures 2 à 5, les premiers amortisseurs 16 sont préférentiellement des amortisseurs linéaires. Par exemple, les premiers amortisseurs sont des vérins, tels que des vérins hydrauliques, et amortissent les vibrations du hauban 8 par amortissement visqueux. Dans le mode de réalisation illustré par ces Figures, le dispositif 10 comprend deux premiers amortisseurs 16. Les premiers amortisseurs 16 sont agencés parallèlement entre eux. En outre, ils s'étendent sensiblement transversalement au hauban 8. Les premiers amortisseurs 16 sont par ailleurs inclinés par rapport au plan vertical du hauban 8 dans la configuration d'utilisation du dispositif 10, dans laquelle le support 14 est fixé au tablier 6 qui forme une structure de réception du support 14, et dans laquelle les premiers amortisseurs 16 sont fixés au collier 12 enserrant le hauban 8. Par « inclinés par rapport au plan vertical du hauban 8 », on entend ici que les premiers amortisseurs s'étendent suivant une direction formant un angle significatif avec le plan vertical du hauban 8.

En référence à la Figure 4, chaque premier amortisseur 16 comprend un premier élément 32 et un deuxième élément 34 déplaçables de façon télescopique l'un par rapport à l'autre. Par exemple, les éléments 32 et 34 coulissent l'un par rapport à l'autre. Ainsi, ces éléments coulissent par exemple l'un dans l'autre.

Le premier élément 32 est fixé au support 14, et le deuxième élément 34 est fixé au hauban 8 par l'intermédiaire du collier 12. Ces deux éléments 32, 34 correspondent en pratique à l'un parmi un corps, ou cylindre, du premier amortisseur 16 et une tige de ce premier amortisseur. La description qui suit sera faite de manière non limitative dans le cas où le premier élément 32 correspond au corps et le deuxième élément correspond à la tige.

Le corps 32 est sensiblement cylindrique. Le corps 32 comprend une extrémité distale 32D et une extrémité proximale 32P par rapport au hauban 8 auquel le dispositif 10 est associé. En outre, le corps 32 comprend deux tourillons 36 faisant partie des moyens de fixation 18. Ces tourillons se présentent sous la forme de saillies radiales de forme générale cylindrique. Ces tourillons 36 sont disposés de part et d'autre du corps 32 sur un même axe radial. Les tourillons 36 sont disposés à un emplacement le long du corps 32 situé à l'écart de l'extrémité distale 32D et en direction de l'extrémité proximale 32P, ou bien au niveau de l'extrémité proximale 32P elle-même. En d'autres termes, les tourillons 36 se situent à un emplacement intermédiaire le long du corps 32, ou bien au niveau de l'extrémité proximale 32P. Préférentiellement, les tourillons 36 sont situés à une distance de l'extrémité distale 32D supérieure ou égale à 25% de la longueur du corps 32, et avantageusement supérieure ou égale à 50% de cette longueur. Dans l'exemple de la Figure 4, ils sont situés à environ 90% de cette longueur.

En référence à la Figure 4, la tige 34 est déplaçable de façon télescopique par rapport au corps. Par exemple, la tige 34 est insérée dans le corps 32. La tige 34 est fixée à une extrémité à un piston (non représenté) déplaçable dans le corps 32 et via lequel l'amortissement visqueux des déplacements de la tige 34 est mis en œuvre. A son autre extrémité, la tige 34 est engagée dans le collier 12. Plus spécifiquement, la tige 34 comporte une tête 38 pourvue d'un orifice 40 recevant un axe 42 (Figure 3) du collier 12 autour duquel la tige 34 peut pivoter.

En référence à la Figure 5, les moyens de fixation 18 comprennent une fixation 44 à cardan autorisant la rotation des premiers amortisseurs 16 considérés par rapport au support 14 selon deux axes orthogonaux.

La fixation 44 est agencée sur le support 14. La fixation 44 comprend un socle 46 fixé sur la surface centrale 28C de l'évidement 28, et deux montants 48 fixés perpendiculairement au socle 46 en regard l'un de l'autre. Le socle et les montants sont communs aux premiers amortisseurs 16.

La fixation 44 comprend également, pour chaque premier amortisseur 16, un plateau 50 à tourillons 52 pourvu d'un passage central 55 dans lequel le corps 32 de l'amortisseur 16 considéré est engagé. Le passage central 55 présente des dimensions supérieures à la section du corps 32, de sorte que le corps 32 n'est pas maintenu immobile par les bords du passage central 55. Comme décrit ci-après, ceci autorise la rotation relative du corps 32 par rapport au plateau 50 dans le passage 55.

Le plateau 50 est fixé aux montants 48 par ses deux tourillons 52 cylindriques s'étendant coaxialement depuis l'une et l'autre de deux tranches opposées du plateau 50, autorisant la rotation du plateau 50 autour d'un axe X. Cet axe X correspond à la direction selon laquelle les tourillons 52 s'étendent. Le plateau 50 présente en outre deux orifices de réception 54 coaxiaux dans chacun desquels l'un des tourillons 36 du corps 32 du premier amortisseur 16 est reçu de manière mobile (seul un orifice 54 est illustré sur la Figure 5). Ces orifices 54 sont agencés en regard l'un de l'autre dans l'une et l'autre des tranches du plateau 50 qui ne sont pas en regard des montants 48. Ces orifices 52 autorisent la rotation du premier amortisseur 16 autour d'un axe Y (correspondant à l'axe des orifices 54) sensiblement orthogonal à l'axe X. Cet axe Y est sensiblement parallèle aux montants 48.

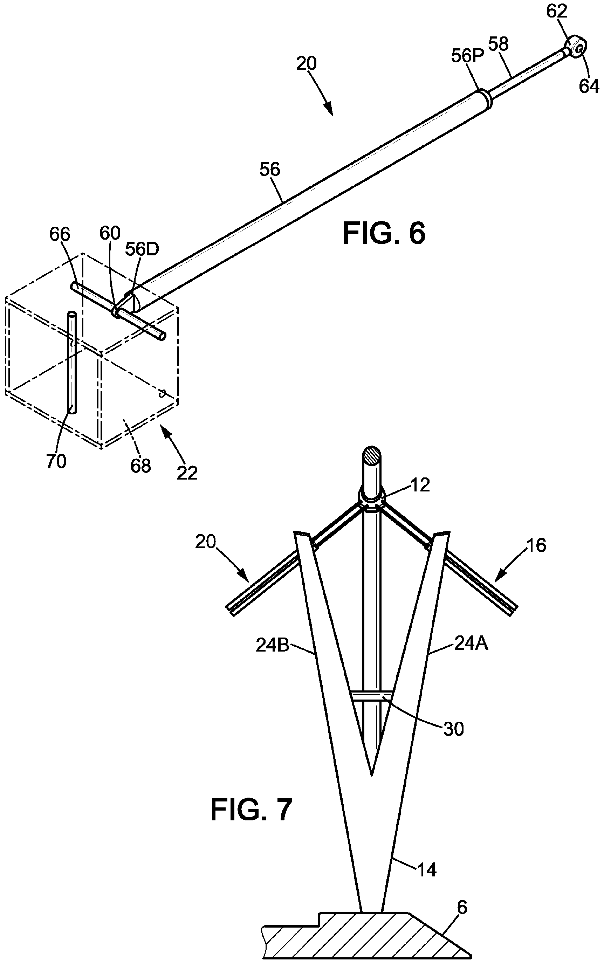

En référence à la Figure 6, les deuxièmes amortisseurs 20 sont avantageusement des amortisseurs linéaires. Par exemple, les amortisseurs 20 sont des vérins, tels que des vérins hydrauliques. Les deuxièmes amortisseurs 20 s'étendent sensiblement transversalement au hauban 8 associé. En outre, ils s'étendent sensiblement dans le plan vertical du hauban 8 associé.

Chaque deuxième amortisseur 20 comprend un premier élément 56 et un deuxième élément 58 déplaçables de façon télescopique l'un par rapport à l'autre. Comme pour les premiers amortisseurs, ces premier et deuxième éléments correspondent à un corps ou une tige du deuxième amortisseur. La description qui suit est faite dans le cas non limitatif dans lequel le premier élément 56 correspond au corps et le deuxième élément 58 correspond à la tige.

Le corps 56 présente une forme générale cylindrique. En outre, il comprend une extrémité distale 56D et une extrémité proximale 56P par rapport au hauban 8 et au niveau de laquelle est agencé un orifice de passage 60 d'un axe de fixation des moyens de fixation 22.

La tige 58 est sensiblement identique à la tige 34 des premiers amortisseurs 16. Elle comprend une extrémité fixée sur un piston (non représenté) mobile dans le corps 56, et, à son autre extrémité, une tête 62 pourvue d'un passage 64 de réception d'un axe 42 du collier 12.

Toujours en référence à la Figure 6, les moyens de fixation 22 comprennent, pour chaque deuxième amortisseur 20, un axe de fixation 66 reçu dans l'orifice 60 du corps 56 du deuxième amortisseur 20 correspondant. En outre, les moyens de fixation 22 comprennent une chape 68 dans laquelle le ou les axes de fixation 66 du ou des premiers amortisseurs sont reçus. Cette chape 68 est fixée au support 14 au niveau de l'extrémité de la branche courte 24B. Préférentiellement, la chape 68 est fixée au support 14 par l'intermédiaire d'un axe 70 sensiblement orthogonal à ou aux axes de fixation 66. Les moyens de fixation 22 définissent ainsi une fixation à cardan autorisant la rotation du deuxième amortisseur 20 par rapport à deux axes orthogonaux. Comme décrit plus en détail ci-après, ceci permet aux deuxièmes amortisseurs d'accompagner les déplacements longitudinaux du point P du hauban 8, par exemple du fait des dilatations thermiques de ce dernier, et d'accompagner les déplacements du point P parallèlement au plan de la Figure 3 sans que les deuxièmes amortisseurs 20 ne subissent de flexion.

Le fonctionnement du dispositif 10 va maintenant être décrit.

Lors du fonctionnement du dispositif 10, le hauban 8 est sujet à des vibrations et se dilate sous l'effet des variations de température. Ces vibrations et dilatations se traduisent par des déplacements du point d'attache P aussi bien transversalement au hauban 8 que longitudinalement. Ces vibrations et déplacements du point d'attache P sont communiqués au dispositif 10 par l'intermédiaire du collier 12 auquel sont fixées les extrémités libres des tiges 34 et 58 des premiers et deuxièmes amortisseurs 16, 20. Les déplacements du point P transversalement au hauban induisent un déplacement des tiges 34, 58 dans le corps 32, 56 de l'amortisseur correspondant. L'énergie de ces déplacements est alors dissipée dans l'amortisseur correspondant par amortissement visqueux.

En outre, lorsque le point d'attache P se déplace longitudinalement, les amortisseurs 16, 20 pivotent par rapport au support 14 selon les axes de rotation autorisés par les moyens de fixation 18, 22 correspondants et suivent ainsi les déplacements du point P sans subir de flexion. En particulier, les premiers amortisseurs 16 pivotent dans l'évidement 28. La rotation des tiges 34, 58 des amortisseurs 16, 20 par rapport au collier 12 limite également les flexions appliquées aux amortisseurs lors des déplacements du point d'attache P.

Le dispositif d'amortissement 10 selon l'invention présente de nombreux avantages.

En particulier, la fixation des premiers amortisseurs au niveau d'un emplacement le long de ces amortisseurs situé à l'écart de l'extrémité distale du premier élément permet de réduire le gabarit du support. En effet, la longueur des amortisseurs est alors un critère peu dimensionnant pour le support, contrairement à une configuration dans laquelle l'amortisseur est fixé au support au niveau de l'extrémité distale du premier élément 32. Cette disposition réduit l'espace occupé par le support au niveau du tablier, ce qui limite la gêne pour la circulation des véhicules et des piétons que le support pourrait engendrer. Ceci est d'autant plus marqué que l'emplacement de la fixation des amortisseurs au support est éloignée de l'extrémité distale des premiers éléments 32 des amortisseurs par rapport au hauban qu'ils ont vocation à amortir. En outre, ceci est particulièrement avantageux lorsque les premiers amortisseurs sont inclinés par rapport au plan vertical dans lequel le hauban s'étend sensiblement.

En outre, la disposition des deuxièmes amortisseurs sensiblement à l'aplomb du hauban 8 associé contribue plus avant à réduire l'encombrement du dispositif 10, en particulier ses dimensions latérales. Avantageusement, afin de tirer profit de ce faible encombrement latéral, le support 14 est fixé au niveau du tablier 6, la branche 24B du support étant orientée vers une chaussée C (illustrée en Figure 3) du pont 2 sur laquelle circulent des véhicules, la branche 24A étant orientée à l'écart de cette chaussée. Comme illustrée sur la Figure 3, le dispositif autorise ainsi le passage des piétons sur le tablier, par exemple entre le support 14 et le bord du tablier, tout en n'entravant pas la circulation sur la chaussée C.

Les modes de réalisation décrits et évoqués ci-dessus sont des illustrations de la présente invention. Diverses modifications peuvent leur être apportées sans sortir du cadre de l'invention qui ressort des revendications annexées.

En particulier, le dispositif a été décrit comme comprenant deux premiers amortisseurs 16 et deux deuxièmes amortisseurs 20. Alternativement, le dispositif 10 comprend un seul ou plus de deux premiers amortisseurs 16. En outre, dans certains modes de réalisation, indépendamment du nombre de premiers amortisseurs 16, le dispositif 10 comprend un seul ou plus de deux deuxièmes amortisseurs 20.

Par ailleurs, les tourillons 36 ont été décrits comme portés par les premiers amortisseurs 16. Toutefois, en variante, les tourillons sont portés par le plateau 50 et les orifices 54 sont portés par les premiers amortisseurs 16.

En outre, la fixation 44 a été décrite comme comprenant un socle 46 fixé au support au niveau de la surface centrale 28C. Toutefois, en variante, le socle 46 est fixé à une paroi latérale 28P de l'évidement 28. En variante encore, la fixation 44 est dépourvue de socle 46 et est fixée au support 14 par ses montants 48.

Par ailleurs, le socle 46 et les montants 48 ont été décrits comme étant communs aux premiers amortisseurs 16. En variante, les moyens de fixation comprennent pour chaque premier amortisseur des montants fixés au support, ou bien des montants et un socle fixé au support.

En outre, dans certains modes de réalisation, l'évidement 28 comprend une seule surface inclinée 28I. En variante, l'évidement 28 comprend également ou alternativement des surfaces inclinées verticales 28V ménagées dans les parois latérales de l'évidement 28 (en pointillés sur la Figure 5). Ces surfaces inclinées verticales 28V sont orientées à l'écart des moyens de fixation 18. Elles permettent ainsi d'augmenter le débattement angulaire des premiers amortisseurs lorsque ceux-ci pivotent autour de l'axe Y, de la même manière que les surfaces inclinées 28I permettent d'augmenter le débattement angulaire des premiers amortisseurs autour de l'axe X.

Par ailleurs, les deuxièmes amortisseurs 20 ont été décrits comme s'étendant transversalement au hauban 8 et sensiblement dans le plan vertical du hauban 8. Toutefois, en référence à la Figure 7, en variante, les deuxièmes amortisseurs 20 présentent une disposition analogue à celles des premiers amortisseurs 16. Plus spécifiquement, le support 14 est sensiblement symétrique par rapport à un plan. Le support 14 est par exemple disposé sur le tablier de sorte que ce plan de symétrique corresponde sensiblement au plan vertical du hauban 8 dans la configuration d'utilisation du dispositif 10. La branche 24B présente la même longueur que la branche 24A et présente également à son extrémité un évidement 28 analogue à celui de la branche 24A. Les deuxièmes amortisseurs 20 sont reçus dans cet évidement 28 de la branche 24B et y sont fixés via les moyens de fixation 22. Les deuxièmes amortisseurs 20 sont fixés sur la branche 24B à un emplacement le long de leur corps 56 situé à l'écart de l'extrémité distale 56D de ce corps et en direction de l'extrémité proximale 56P. Ils sont en outre inclinés par rapport au plan vertical du hauban 8. Les moyens de fixation 22 présentent une structure à cardan analogue à la structure des moyens de fixation 18 décrite ci-dessus, et autorisent la rotation relative des deuxièmes amortisseurs 20 par rapport au support 14 selon deux axes orthogonaux.

En outre, le plan selon lequel le support 14 s'étend peut être orthogonal au plan vertical du hauban. Alternativement, le plan du support peut présenter des orientations autres par rapport au plan vertical du hauban, c'est-à-dire que le support 14 peut être fixé sur le tablier de sorte qu'il soit pivoté sur lui-même et que le plan du support ne soit pas orthogonal au plan vertical du hauban.

Par ailleurs, les moyens de fixation 18 ont été décrits comme comprenant une fixation à cardan autorisant une rotation des premiers amortisseurs 16 par rapport au support 14 selon deux axes orthogonaux.

En variante, les moyens de fixation 18 n'autorisent la rotation des premiers amortisseurs qu'autour d'un seul axe. Par exemple, le plateau 50 est fixé de manière immobile aux montants 48 de la fixation 44, ou bien le corps 32 est fixé de manière rigide au plateau 50 correspondant.

En variante encore, la fixation 44 est formée par une rotule élastique solidaire du corps 32 et destinée à coopérer avec des cavités ménagées dans les parois de l'évidement 28 du support 14. Cette rotule autorise également la rotation du premier amortisseur 16 correspondant selon les deux axes orthogonaux X et Y décrits ci-dessus. Comme précédemment, la rotule est fixée sur le corps 32 du premier amortisseur 16 correspondant à un emplacement le long du corps 32 situé à l'écart de l'extrémité distale 32D du corps.

Dans d'autres modes de réalisation, les deuxièmes amortisseurs 20 sont disposés dans le plan vertical du hauban 8 et transversalement à celui-ci, mais sont fixés au support 14 non pas par leur extrémité distale (arrière), mais à un emplacement le long du corps situé à l'écart de leur extrémité distale, comme pour les premiers amortisseurs 16. Dans une telle variante, la branche 24B est plus longue que dans le mode de réalisation des Figures 2 et 3, et son extrémité libre se situe à l'aplomb du hauban 8. Cette extrémité est pourvue d'un évidement 28 analogue à celui de la branche 24A dans lequel les moyens de fixation 22 sont agencés et au travers duquel les deuxièmes amortisseurs 20 sont reçus. Les moyens de fixation 22 sont analogues aux moyens de fixation 18 décrits précédemment et comprennent une fixation à cardan autorisant la rotation des deuxièmes amortisseurs par rapport au support 14 selon deux axes orthogonaux.

Par ailleurs, la description a été donnée ci-dessus dans le cas où le premier élément 32 des amortisseurs correspond au corps de ces amortisseurs, et le deuxième élément 34 correspond à leur tige. Toutefois, d'autres modes de réalisation sont envisageables.

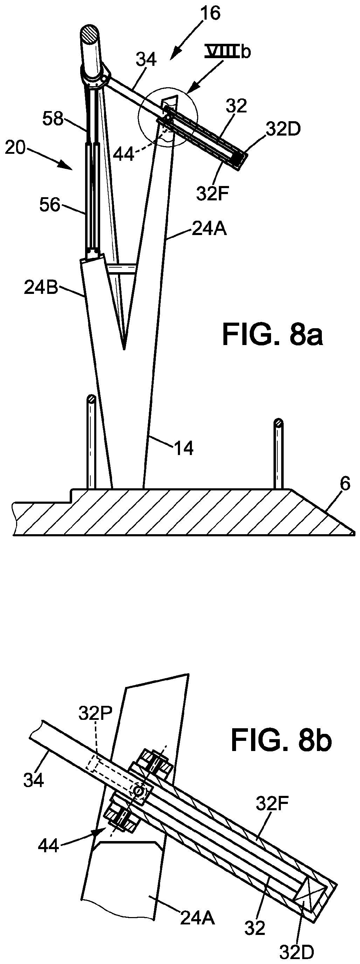

En variante, en référence aux Figures 8a et 8b, pour au moins un premier amortisseur 16, le deuxième élément 34 correspond au corps de l'amortisseur et le premier élément 32 correspond à la tige. Le premier amortisseur 16 comprend en outre une chemise 32F dans laquelle la tige 32 est reçue. Dans ce mode de réalisation, le premier amortisseur 16 (ou éventuellement tout ou partie des différents premiers amortisseurs) est fixé au support 14 par l'intermédiaire de la chemise 32F dans laquelle la tige 32 est reçue.

La chemise 32 présente une forme générale cylindrique agencée coaxialement par rapport à la tige 32 et au corps 34. La chemise 32F présente une extrémité distale (par rapport au hauban 8) qui est obturée, et une extrémité proximale débouchante pour l'insertion de la tige 32. L'extrémité distale 32D de la tige 32 est fixée à l'extrémité distale de la chemise 32F, c'est-à-dire au fond de la chemise 32F. Cette fixation est par exemple réalisée par encastrement. La chemise 32F est par ailleurs fixée au support 14 au niveau de la branche 24A de la même manière que le corps dans les modes de réalisation décrits ci-dessus. En d'autres termes, la chemise 32F est fixée au support 14 par une fixation à cardan telle la fixation 44. Cette fixation se trouve à un emplacement le long de l'amortisseur qui est situé à l'écart de l'extrémité distale 32D de la tige 32. Cette fixation 44 est fixée dans un évidement de la branche 24A et comprend par exemple des tourillons et des orifices correspondants portés par l'un et l'autre parmi un plateau de la fixation 44 et la chemise 32F, le plateau étant lui-même monté pivotant sur des montants de la fixation autour d'un axe orthogonal à celui autour duquel la rotation de la chemise 32F par rapport au plateau s'opère.

Sans que ceci soit sa fonction principale, la présence de la chemise 32F a pour effet de protéger la tige 32 des agressions mécaniques et climatiques. Avantageusement, une partie du corps 34 est également agencée dans la chemise 32F, ce qui étend la protection conférée par la chemise 32F à cette partie du corps 34. Dans cette configuration, pour éviter la stagnation et l'accumulation d'eau de ruissellement ou de condensation, une protection mobile, telle que par exemple une manchette souple en soufflet (non représentée) peut être aménagée sur le corps 34, à l'extrémité proximale de la chemise 32F. Alternativement ou parallèlement, un ou plusieurs trous de drainage peuvent être pratiqués à l'extrémité basse de la chemise 32F.

## Revendications

1. Dispositif d'amortissement de vibrations d'un câble (8), le dispositif comprenant :
- un support (14),
- au moins un premier amortisseur (16) pour amortir les vibrations du câble (8), le premier amortisseur (16) comprenant un premier élément (32) et un deuxième élément (34) déplaçables de façon télescopique l'un par rapport à l'autre, le deuxième élément (34) étant destiné à être fixé au câble (8), le premier élément (32) présentant une extrémité distale (32D) et une extrémité proximale (32P) par rapport au câble (8), et
- une fixation (44) agencée sur le support (14) pour fixer le premier amortisseur (16) au support (14),
**caractérisé en ce que** la fixation (44) est fixée au premier amortisseur (16) à un emplacement le long du premier amortisseur (16) situé à l'écart de l'extrémité distale (32D) du premier élément (32) en direction de l'extrémité proximale (32P),
et dans lequel, dans une configuration d'utilisation du dispositif d'amortissement dans laquelle le support est fixé à une structure de réception et le premier amortisseur (16) est fixé au câble et au support (14), le premier amortisseur (16) est incliné par rapport à un plan vertical dans lequel le câble (8) s'étend et sensiblement dans lequel le support est fixé à la structure de réception..

2. Dispositif d'amortissement selon la revendication 1, dans lequel ledit emplacement est situé à une distance de l'extrémité distale (32D) du premier élément (32) du premier amortisseur (16) supérieure ou égale à 25%, et de préférence supérieure ou égale à 50% de la longueur du premier élément (32).

3. Dispositif d'amortissement selon la revendication 1 ou 2, dans lequel le premier élément (32) est un corps du premier amortisseur (16) et le deuxième élément (34) est une tige déplaçable de façon télescopique par rapport au corps, la fixation (44) étant fixée au premier élément.

4. Dispositif d'amortissement selon la revendication 1 ou 2, dans lequel le premier élément (32) est une tige du premier amortisseur (16) et le deuxième élément (34) est un corps du premier amortisseur, la tige étant déplaçable de façon télescopique par rapport au corps.

5. Dispositif d'amortissement selon l'une des revendications précédentes, dans lequel la fixation (44) comprend des montants (48), un plateau (50) monté sur les montants (48) de manière pivotante autour d'un premier axe (Y), le plateau (50) comprenant un passage central (55) dans lequel le premier amortisseur (16) est agencé, le premier amortisseur (16) étant monté dans le passage central (55) de manière pivotante par rapport au plateau (50) autour d'un deuxième axe.

6. Dispositif d'amortissement selon la revendication 5, dans lequel la fixation (44) comprend des tourillons (36) portés par l'un parmi le plateau (50) et le premier amortisseur et des orifices de réception complémentaires (54) portés par l'autre parmi le plateau (50) et le premier amortisseur (16), le premier amortisseur étant fixé au plateau par coopération des tourillons (36) et des orifices de réception (54).

7. Dispositif d'amortissement selon l'une quelconque des revendications précédentes, dans lequel le support comprend un évidement (28) dans lequel la fixation (44) est agencée et au travers duquel le ou chaque premier amortisseur (16) est disposé.

8. Dispositif d'amortissement selon la revendication 7, dans lequel l'évidement (28) comprend une surface centrale (28C) et au moins une surface inclinée (28I) orientée à l'écart de la fixation (44) et située à l'aplomb du premier amortisseur (16).

9. Dispositif d'amortissement selon l'une quelconque des revendications précédentes, comprenant en outre au moins un deuxième amortisseur (20) pour amortir les vibrations du câble, le deuxième amortisseur (20) comprenant un premier élément (56) et un deuxième élément (58) déplaçables de façon télescopique l'un par rapport à l'autre, le deuxième élément (58) étant destiné à être fixé au câble, ledit premier élément (56) étant fixé au support par une deuxième fixation (68).

10. Dispositif d'amortissement selon la revendication 9, dans lequel la deuxième fixation (68) est fixée au premier élément (56) du deuxième amortisseur (20) au niveau d'une extrémité distale (56D) du premier élément (56) dudit deuxième amortisseur (20) par rapport au câble (8).

11. Dispositif d'amortissement selon l'une quelconque des revendications 9 ou 10, dans lequel le ou chaque deuxième amortisseur (20) s'étend dans un plan vertical dans lequel s'étend le câble (8).

12. Dispositif d'amortissement selon la revendication 9, dans lequel la deuxième fixation (68) est fixée au deuxième amortisseur (20) à un emplacement le long du premier élément (56) du deuxième amortisseur (20) situé à l'écart de l'extrémité distale (56D) du premier élément (56).

13. Dispositif d'amortissement selon la revendication 12, dans lequel, dans une configuration d'utilisation dans laquelle le support (14) est fixé à une structure de réception et le deuxième amortisseur (20) est fixé au câble et au support (14), le deuxième amortisseur (20) est incliné par rapport à un plan vertical dans lequel le câble (8) s'étend.

14. Dispositif d'amortissement selon l'une quelconque des revendications précédentes, dans lequel le dispositif d'amortissement est un dispositif d'amortissement externe, une extrémité inférieure du support étant fixée à un tablier de pont, le support s'étendant depuis le tablier de pont en direction du câble.

15. Pont à haubans, comprenant au moins un pylône (4), un tablier (6), des haubans (8) constitués de câbles s'étendant obliquement entre le pylône (4) et le tablier (6) pour supporter le tablier (6), et au moins un dispositif d'amortissement (10) selon l'une quelconque des revendications précédentes monté entre un hauban (8) et le tablier (6).

## Patentansprüche

1. Vorrichtung zur Dämpfung von Schwingungen eines Kabels (8), wobei die Vorrichtung umfasst:
- einen Träger (14),
- mindestens einen ersten Dämpfer (16) zum Dämpfen der Schwingungen des Kabels (8), wobei der erste Dämpfer (16) ein erstes Element (32) und ein zweites Element (34) umfasst, die teleskopartig relativ zueinander beweglich sind, wobei das zweite Element (34) zur Befestigung an dem Kabel (8) bestimmt ist, wobei das erste Element (32) ein relativ zu dem Kabel (8) distales Ende (32D) und proximales Ende (32P) aufweist, und
- eine an dem Träger (14) angeordnete Halterung (44) zur Befestigung des ersten Dämpfers (16) an dem Träger (14),
**dadurch gekennzeichnet, dass** die Halterung (44) an dem ersten Dämpfer (16) an einer Stelle entlang des ersten Dämpfers (16) angebracht ist, die von dem distalen Ende (32D) des ersten Elements (32) in Richtung des proximalen Endes (32P) beabstandet ist,
und wobei in einer Verwendungskonfiguration der Dämpfungsvorrichtung, in der der Träger an einer Aufnahmestruktur befestigt ist und der erste Dämpfer (16) an dem Kabel und dem Träger (14) befestigt ist, der erste Dämpfer (16) relativ zu einer vertikalen Ebene geneigt ist, in der sich das Kabel (8) erstreckt und in der der Träger im Wesentlichen an der Aufnahmestruktur befestigt ist.

2. Dämpfungsvorrichtung nach Anspruch 1, wobei sich die Stelle in einem Abstand vom distalen Ende (32D) des ersten Elements (32) des ersten Dämpfers (16) befindet, der größer oder gleich 25% und vorzugsweise größer oder gleich 50% der Länge des ersten Elements (32) ist.

3. Dämpfungsvorrichtung nach Anspruch 1 oder 2, wobei das erste Element (32) ein Körper des ersten Dämpfers (16) ist und das zweite Element (34) eine relativ zum Körper teleskopartig bewegliche Stange ist, wobei die Halterung (44) am ersten Element befestigt ist.

4. Dämpfungsvorrichtung nach Anspruch 1 oder 2, wobei das erste Element (32) eine Stange des ersten Dämpfers (16) und das zweite Element (34) ein Körper des ersten Dämpfers ist, wobei die Stange relativ zum Körper teleskopartig beweglich ist.

5. Dämpfungsvorrichtung nach einem der vorstehenden Ansprüche, wobei die Halterung (44) Pfosten (48) und eine Platte (50) umfasst, die an den Pfosten (48) um eine erste Achse (Y) schwenkbar montiert ist, wobei die Platte (50) einen zentralen Durchgang (55) umfasst, in dem der erste Dämpfer (16) angeordnet ist, wobei der erste Dämpfer (16) in dem zentralen Durchgang (55) relativ zu der Platte (50) um eine zweite Achse schwenkbar montiert ist.

6. Dämpfungsvorrichtung nach Anspruch 5, bei der die Halterung (44) Drehzapfen (36) aufweist, die von der Platte (50) oder dem ersten Dämpfer getragen werden, und komplementäre Aufnahmelöcher (54), die von der Platte (50) oder dem ersten Dämpfer (16) getragen werden, wobei der erste Dämpfer durch Zusammenwirken der Drehzapfen (36) und der Aufnahmelöcher (54) an der Platte befestigt ist.

7. Dämpfungsvorrichtung nach einem der vorstehenden Ansprüche, wobei der Träger eine Aussparung (28) aufweist, in der die Halterung (44) angeordnet ist und durch die der oder jeder erste Dämpfer (16) angeordnet ist.

8. Dämpfungsvorrichtung nach Anspruch 7, wobei die Aussparung (28) eine Mittelfläche (28C) und mindestens eine geneigte Fläche (28I) umfasst, die abseits von der Halterung (44) ausgerichtet und im Lot des ersten Dämpfers (16) angeordnet ist.

9. Dämpfungsvorrichtung nach einem der vorstehenden Ansprüche, die außerdem mindestens einen zweiten Dämpfer (20) zur Dämpfung der Schwingungen des Kabels umfasst, wobei der zweite Dämpfer (20) ein erstes Element (56) und ein zweites Element (58) umfasst, die teleskopartig zueinander verschiebbar sind, wobei das zweite Element (58) dazu bestimmt ist, an dem Kabel befestigt zu werden, wobei das erste Element (56) durch eine zweite Halterung (68) an dem Träger befestigt ist.

10. Dämpfungsvorrichtung nach Anspruch 9, wobei die zweite Halterung (68) an dem ersten Element (56) des zweiten Dämpfers (20) an einem relativ zu dem Kabel (8) distalen Ende (56D) des ersten Elements (56) des zweiten Dämpfers (20) befestigt ist.

11. Dämpfungsvorrichtung nach einem der Ansprüche 9 oder 10, wobei sich der oder jeder zweite Dämpfer (20) in einer vertikalen Ebene erstreckt, in der sich das Kabel (8) erstreckt.

12. Dämpfungsvorrichtung nach Anspruch 9, wobei die zweite Halterung (68) an dem zweiten Dämpfer (20) an einer Stelle entlang des ersten Elements (56) des zweiten Dämpfers (20) angebracht ist, die vom distalen Ende (56D) des ersten Elements (56) beabstandet ist.

13. Dämpfungsvorrichtung nach Anspruch 12, wobei in einer Verwendungskonfiguration, in der der Träger (14) an einer Aufnahmestruktur befestigt ist und der zweite Dämpfer (20) an dem Kabel und dem Träger (14) befestigt ist, der zweite Dämpfer (20) in Bezug auf eine vertikale Ebene, in der sich das Kabel (8) erstreckt, geneigt ist.

14. Dämpfungsvorrichtung gemäß einem der vorstehenden Ansprüche, wobei die Dämpfungsvorrichtung eine externe Dämpfungsvorrichtung ist, wobei ein unteres Ende des Trägers an einem Brückendeck befestigt ist, wobei sich der Träger von dem Brückendeck in Richtung des Kabels erstreckt.

15. Schrägseilbrücke, umfassend mindestens einen Pfeiler (4), ein Deck (6), Schrägseile (8), die aus Kabeln bestehen, die sich schräg zwischen dem Pfeiler (4) und dem Deck (6) erstrecken, um das Deck (6) zu tragen, und mindestens eine Dämpfungsvorrichtung (10) gemäß einem der vorstehenden Ansprüche, die zwischen einem Schrägseil (8) und dem Deck (6) montiert ist.

## Claims

1. Device for damping vibrations of a cable (8), the device comprising:
- a support (14),
- at least one first damper (16) for damping the vibrations of the cable (8), the first damper (16) comprising a first element (32) and a second element (34) movable telescopically with respect to one another, the second element (34) being intended to be fastened to the cable (8), the first element (32) having a distal end (32D) and a proximal end (32P) with respect to the cable (8), and
- a fastener (44) arranged on the support (14) to fasten the first damper (16) to the support (14),
**characterised in that** the fastener (44) is fastened to the first damper (16) at a location along the first damper (16) located away from the distal end (32D) of the first element (32) in the direction of the proximal end (32P),
and wherein, in a configuration of use of the damping device in which the support is fastened to a receiving structure and the first damper (16) is fastened to the cable and to the support (14), the first damper (16) is inclined with respect to a vertical plane in which the cable (8) extends and substantially in which the support is fastened to the receiving structure.

2. Damping device according to claim 1, wherein said location is located at a distance from the distal end (32D) of the first element (32) of the first damper (16) greater than or equal to 25% and preferably greater than or equal to 50% of the length of the first element (32).

3. Damping device according to claim 1 or 2, wherein the first element (32) is a body of the first damper (16) and the second element (34) is a rod movable telescopically with respect to the body, the fastener (44) being fastened to the first element.

4. Damping device according to claim 1 or 2, wherein the first element (32) is a rod of the first damper (16) and the second element (34) is a body of the first damper, the rod being movable telescopically with respect to the body.

5. Damping device according to one of the previous claims, wherein the fastener (44) comprises uprights (48), a plate (50) mounted on the uprights (48) in a pivoting manner about a first axis (Y), the plate (50) comprising a central passage (55) in which the first damper (16) is arranged, the first damper (16) being mounted in the central passage (55) in a pivoting manner with respect to the plate (50) about a second axis.

6. Damping device according to claim 5, wherein the fastener (44) comprises trunnions (36) carried by one of either the plate (50) or the first damper and complementary receiving orifices (54) carried by the other of either the plate (50) and the first damper (16), the first damper being fastened to the plate by cooperation of the trunnions (36) and of the receiving orifices (54).

7. Damping device according to any one of the previous claims, wherein the support comprises a recess (28) in which the fastener (44) is arranged and through which the or each first damper (16) is disposed.

8. Damping device according to claim 7, wherein the recess (28) comprises a central surface (28C) and at least one inclined surface (281) oriented away from the fastener (44) and located vertically in line with the first damper (16).

9. Damping device according to any one of the previous claims, further comprising at least one second damper (20) to damp the vibrations of the cable, the second damper (20) comprising a first element (56) and a second element (58) movable telescopically with respect to one another, the second element (58) being intended to be fastened to the cable, said first element (56) being fastened to the support by a second fastener (68).

10. Damping device according to claim 9, wherein the second fastener (68) is fastened to the first element (56) of the second damper (20) at a distal end (56D) of the first element (56) of said second damper (20) with respect to the cable (8).

11. Damping device according to any one of claims 9 or 10, wherein the or each second damper (20) extends in a vertical plane in which the cable (8) extends.

12. Damping device according to claim 9, wherein the second fastener (68) is fastened to the second damper (20) at a location along the first element (56) of the second damper (20) located away from the distal end (56D) of the first element (56).

13. Damping device according to claim 12, wherein, in a configuration of use in which the support (14) is fastened to a receiving structure and the second damper (20) is fastened to the cable and to the support (14), the second damper (20) is inclined with respect to a vertical plane in which the cable (8) extends.

14. Damping device according to any one of the previous claims, wherein the damping device is an external damping device, a lower end of the support being fastened to a bridge deck, the support extending from the bridge deck in the direction of the cable.

15. Cable-stayed bridge, comprising at least one pylon (4), a deck (6), stays (8) consisting of cables extending obliquely between the pylon (4) and the deck (6) to support the deck (6), and at least one damping device (10) according to any one of the previous claims mounted between a stay (8) and the deck (6).
